Europäisches Patentamt

European Patent Office

Office européen des brevets

(19)

(11) **EP 0 803 079 B1**

(12) **EUROPÄISCHE PATENTSCHRIFT**

(45) Veröffentlichungstag und Bekanntmachung des Hinweises auf die Patenterteilung:
**21.04.1999 Patentblatt 1999/16**

(21) Anmeldenummer: **96900934.9**

(22) Anmeldetag: **10.01.1996**

(51) Int Cl.⁶: **G03B 19/10**

(86) Internationale Anmeldenummer:
**PCT/EP96/00088**

(87) Internationale Veröffentlichungsnummer:
**WO 96/21882 (18.07.1996 Gazette 1996/33)**

(54) **KAMERA MIT OBJEKTIV- UND BILDTRÄGEREINSTELLVORRICHTUNG UND SCHARFSTELLVERFAHREN**

CAMERA WITH OBJECT LENS AND IMAGE CARRIER ADJUSTING DEVICE AND FOCUSSING PROCESS

APPAREIL PHOTO AVEC DISPOSITIF DE REGLAGE D'OBJECTIF ET DE SUPPORT D'IMAGE ET PROCEDE DE MISE AU POINT

(84) Benannte Vertragsstaaten:
**CH DE GB IT LI NL**

(30) Priorität: **10.01.1995 DE 19500507**

(43) Veröffentlichungstag der Anmeldung:
**29.10.1997 Patentblatt 1997/44**

(73) Patentinhaber: **Donner, Wilfried**
**33615 Bielefeld (DE)**

(72) Erfinder: **Donner, Wilfried**
**33615 Bielefeld (DE)**

(74) Vertreter: **Hanewinkel, Lorenz, Dipl.-Phys.**
**Patentanwalt**
**Ferrariweg 17a**
**33102 Paderborn (DE)**

(56) Entgegenhaltungen:
DE-A- 3 433 412          US-A- 5 027 143

**Beschreibung**

Die Erfindung betrifft ein Scharfstellverfahren einer Kamera und diese selbst

- mit einem Objektivträger und einem Bildträger, die relativ zueinander in einer Bankrichtung abstandveränderbar gehalten sind, wobei die demgemäßen Abstandsänderungen einem Prozessor zugeführt werden,
- und in deren Objektivträger ein Objektiv um zwei zueinander senkrechte und zur Bankrichtung senkrechte Achsen verschwenkbar gehalten ist, dessen beiden demgemäßen Objektivschwenkwinkel und die Objektivbrennweite dem Prozessor zugeführt werden,
- und in deren Bildträger eine Bildaufnehmerebene, insbesondere eine Mattscheibe, um zwei zueinander senkrechte und zur Bankrichtung senkrechte Achsen verschwenkbar gehalten ist, deren beiden demgemäßen Bildaufnehmerschwenkwinkel dem Prozessor zugeführt werden,
- und in deren Bildaufnehmerebene ein Scharfeinstellungssensor, der ein Schärfemaß liefert, in zwei Bildaufnehmerkoordinaten positionierbar ist, die dem Prozessor zusammen mit dem Schärfemaß zugeführt werden,
- wobei für die gleichzeitige Scharfeinstellung mindestens dreier ausgewählter Bildpunktbereiche, die in einer Ausgangsbildebene liegen,
- diese auf der Bildaufnehmerebene mit dem Scharfeinstellungssensor durch die Änderung des Bildträgerabstandes vom Objektiv nacheinander jeweils in ihrer Scharfeinstellung unter Erfassung der zugehörigen Bildaufnehmerkoordinaten und der Bildträgerabstandsänderungen lagemäßig im Prozessor erfaßt werden,
- und aus den so erhaltenen Eingangsdaten vom Prozessor Lageparamter der Bildaufnehmerebene und der Ausgangsbildebene rechnerisch ermittelt werden und daraus zusammen mit einem berechnungsnotwendigen weiteren Abbildungsparameter durch Lösung von Abbildungsgleichungen solche Solleinstellwerte für Verschwenkungen des Objektivträgers und einer Abstandseinstellung des Bildträgers zum Objektivträger errechnet und ausgegeben werden,
- so daß die mit diesen Solleinstellwerten eingestellte neue Bildebene mit der Bildaufnehmerebene möglichst zur Deckung kommt.

Eine derartige Kamera ist aus der DE 34 33 412 C2 bekannt. Bei dieser werden die Objektivbrennweite, ein Abbildungsmaßstab, auf die Abbildungsoptik bezogene Raumkoordinaten von drei ausgewählten Bildpunktbereichen eines Szenenbildes, wozu eine Schärfesonde als Hilfsmittel dient, Verstellwinkel der Objektiv- und Bildebenenneigungen und -verschwenkungen und der Abstand einer Objektivhauptebene von der Bildebene dem Prozessor entweder per Tastatur oder unmittelbar mit Meßmitteln zugeführt, der aus diesen Daten nach dem Gesetz von Scheimpflug, dem nach sich die Objektivebene, die Ebene der die Szenenpunkte angehören und die Ebene, der die scharfen Bildpunkte angehören, in einer Geraden zu schneiden haben, eine Sollvorgabe der Verstellwinkel und des Abstandes berechnet, so daß nach einer damit vorgenommenen Einstellung die ausgewählten Bildpunktbereiche des Szenenbildes bei sogenanntem doppelten Schärfeausgleich möglichst scharf abgebildet werden. Bei dieser Vorrichtung werden also die absoluten Raumkoordinaten der Bildpunkte und die Strukturdaten der Abbildungsoptik als Ausgangswerte für eine geschlossene Lösung der Abbildungsgleichungen erforderlich, um jeweils eine solche Lage der Abbildungsebene in Bezug auf die Objektiveinstellung zu finden, in der die ausgewählten Bildpunktbereiche in der Abbildungsebene liegen, möglichst scharf abgebildet sind. Dies erfordert einen erheblichen Aufwand an Meßmitteln mit hohen absoluten Genauigkeitsanforderungen. Darüber hinaus gilt das bisher benutzte Gesetz von Scheimpflug nur für die Abbildung im paraxialen Bereich einer dünnen Linse, die in der Praxis bedeutungslos ist.

Es ist Aufgabe der Erfindung, eine automatische Scharfeinstellung eines Szenenbildes bei doppeltem Schärfeausgleich mit zur eingangs bezeichneten Kamera verringertem Meßmittelaufwand und vereinfachter Vorrichtung und mit praxisgerechten Objektiven zu erreichen.

Die Lösung der Aufgabe besteht darin, daß einer der Objektiveinstellparameter um ein vorgegebenes Maß verändert wird und dabei für einen ausgewählten Bildpunkt eine zwischen seinen beiden Scharfstellungen liegende Auszugsdifferenz einer Auszugsverstellvorrichtung in der Bankrichtung gemessen wird und ein erster Satz der Abbildungsgleichungen unter Einsetzung der ursprünglichen Objektiveinstellparameter und einer unbestimmten Bildweite sowie ein weiterer Satz der Abbildungsgleichungen unter Einsetzung der variierten Objektiveinstellparameter und der unbestimmten um die Auszugsdifferenz geänderten Bildweite gleichgesetzt und nach den Solleinstellwerten aufgelöst werden oder funktionale Ableitungen der Abbildungsgleichungen bezüglich des Objektiveinstellparameters und bezüglich der jeweiligen Scharfstellung zugehörigen Bildweite gebildet werden und die vorgegebene Einstellungsänderung und die gemessene Auszugsdifferenz in die genannten Ableitungen eingesetzt werden und diese nach den Solleinstellparametern aufgelöst werden.

Vorteilhafte Ausgestaltungen sind in den Unteransprüchen beschrieben.

Durch das neue Verfahren erübrigt sich die absolute Entfernungsmessung zwischen dem Objektivträger und dem Bildträger. Es genügt, daß jeweils die Winkelmeßvorrichtungen vorhanden sind und die relative Abstandsmessung, also die Auszugsänderungen bei den verschiedenen Scharfeinstellungen sowie die Koordinatenmessungen auf der Mattscheibe und die Scharfstellungsbestimmung vorhanden sind.

Das Einstellverfahren läßt sich zu folgendem Ablauf zusammenfassen:

.    Der Photograph stellt die Perspektive durch Verschwenken der Mattscheibe ein und führt anschließend eine sehr grobe Vor-Fokussierung des Bildes im allgemeinen durch Veränderung des Auszuges und in Einzelfällen durch Verschwenken des Objektives durch. Die Parameter am und bm der Mattscheibenebene, die ihren Normalenvektor festlegen, nicht jedoch ihren Abstand vom Objektiv, der hier nicht benötigt wird, sowie die eingestellen Verschwenkwinkel $\Theta_o$ und $\Phi_o$ des Objektives werden über in die Standarten eingebaute Winkelaufnehmer in den Rechner eingelesen.

.    Bestimmung der Koordinaten bi = (xi, yi, zi) von mindestens drei Bildpunkten durch Fokussieren mit Hilfe eines CCD-Sensors od. dgl; das Kameraobjektiv ist dabei um die Winkel $\Theta$o und $\Phi$o verschwenkt. Die X-Achse sei hier die Achse parallel zur optischen Bank der Kamera, die durch den Objektivmittelpunkt geht, die Y-Achse verlaufe senkrecht dazu in horizontaler, die Z-Achse in vertikaler Richtung.

.    Anfitten der Ebene, für die die Summe der Abstandsquadrate der ausgemessenen Bildpunkte minimal wird. Die Parameter dieser Ausgangs-Bildebene seien $a_o$, $b_o$ und $d_o$, sie ist dann gegeben durch = $a_{ox} + b_{oy} + d_{oz}$.

.    Bestimmung der Bildweite b aus der Auszugsdifferenz $\Delta b$ jeweils bei Scharfstellung eines bestimmten Bildpunktes bei einer vorgegebenen Objektiv-Schwenkwinkeländerung - nach den Gleichungen (5) bis (7),

.    Bestimmung der Bildweite b bei unverschwenktem Objektiv nach Gleichung (8),

.    Bestimmung der z-Achsenparameter $d_o$ nach Gleichung (9).

.    Berechnung der Soll-Objektiv-Verstellwinkel $\Theta_{soll}$, $\Phi_{soll}$ und des Mattscheibenschnittpunktes $xb_{soll}$ mit der X-Achse nach den Gleichungen (1), (2) und (3).

Die Ausgangs-Bildebene wird in den Objektraum abgebildet; die so erzeugte Ebene wird bei variierter Objektiv-Verschwenkung in den Bildraum zurück abgebildet mit dem Ziel, die dadurch erhaltene neue Bildebene parallel zur eingestellten Mattscheibenebene auszurichten. Die dazu notwendigen Objektiv-Verstellwinkel $\Theta_{soll}$ und $\Phi_{soll}$ sowie der einzustellende Schnittpunkt $xb_{soll}$ von Mattscheibe und X-Achse ergeben sich zu

$$
\begin{aligned}
\sin\theta \;=\; & -\frac{f\left(a_m^2 - a_m\frac{a_0 f + d_0\cos\theta_0\cos\phi_0}{f - d_0\sin\theta_0} + b_m^2 - b_m\frac{b_0 f + d_0\cos\theta_0\sin\phi_0}{f - d_0\sin\theta}\right)}{\frac{d_0 f}{f - d_0\sin\theta_0}(1 + a_m^2 + b_m^2)} \\[2mm]
& \pm\ \left[f^2\left[\left(a_m^2 - a_m\frac{a_0 f + d_0\cos\theta_0\cos\phi_0}{f - d_0\sin\theta_0} + b_m^2 - b_m\frac{b_0 f + d_0\cos\theta_0\sin\phi_0}{f - d_0\sin\theta_0}\right)^2 \right.\right. \\[2mm]
& \left. -a_m^2 + 2a_m\frac{a_0 f + d_0\cos\theta_0\cos\phi_0}{f - d_0\sin\theta_0}\right. \\[2mm]
& \left. -\left(\frac{a_0 f + d_0\cos\theta_0\cos\phi_0}{f - d_0\sin\theta_0}\right)^2 - b_m^2 + 2b_m\frac{b_0 f + d_0\cos\theta_0\sin\phi_0}{f - d_0\sin\theta_0}\right. \\[2mm]
& \left.\left. -\left(\frac{b_0 f + d_0\cos\theta_0\sin\phi_0}{f - d_0\sin\theta_0}\right)^2\right] - \left(\frac{d_0 f}{f - d_0\sin\theta_0}\right)^2\right]^{\frac{1}{2}} \\[2mm]
& \times\left[\frac{d_0 f}{f - d_0\sin\theta_0}(1 + a_m^2 + b_m^2)\right]^{-1}
\end{aligned}
\tag{1}
$$

$$\sin\phi = \frac{b_0 f + d_0 \cos\theta_0 \sin\phi_0 - b_m(f - d_0 \sin\theta_0) - b_m d_0 \sin\theta}{d_0 \cos\theta} \tag{2}$$

$$x_b = -\frac{d_0 f}{f - d_0 \sin\theta_0 - \dfrac{a_0 f + d_0 \cos\theta_0 \cos\phi_0}{f - d_0 \sin\theta_0} d_0 \cos\theta \cos\phi} \tag{3}$$

Als physikalische Grundlage dient hierbei ausschließlich die Abbildungsgleichung für dünne Linsen; es ist nachzuweisen, daß sich das Verfahren auf einfache Weise auch für die Verwendung beliebiger Objektive, deren optisches Verhalten immer durch ihre Brennweite sowie die Lage ihrer beiden Hauptebenen definiert ist, modifizieren läßt.

Das Objektiv wird jetzt um die derart berechneten Winkel $\Theta$ und $\Phi$ verschwenkt (dabei entspräche $\Theta = \Phi = 0$ gerade der Situation, daß das Objektiv senkrecht auf der optischen Bank der Kamera steht). Die Mattscheibe wird so parallelverschoben, daß sie die X-Achse an der Stelle $x_b$ schneidet.

Es wird insgesamt also folgende Transformation der Eingangsdaten durchgeführt:

$$(\vec{b}_i, a_m, b_m, \theta_0, \phi_0) \rightarrow (a_0, b_0, d_0, a_m, b_m, \theta_0, \phi_0) \rightarrow (\theta, \phi, x_b) \tag{4}$$

Die beiden Abbildungsgleichungen der Ausgangsbildebene und der neuen Bildebene, die in der Mattscheibenebene zu liegen kommt, sind auf die invariante Szenenebene bezogen, weshalb die beiden Objektebenen unmittelbar korreliert werden. Somit ergeben sich Gleichungen, die nicht auf dem Prinzip von Scheimpflug aufgebaut sind, da keine Szenenebene bestimmt wird und auch nicht die Gleichungen der Schnittgeraden zwischen der Szenen- und der Objektivebene sowie der Objektiv- und Bildebene bestimmt werden.

In den Beziehungen (1), (2) und (3) für die Einstellung der Kamera sind die folgenden Paramter der Ausgangs-Bildebene, der Mattscheibe und des Objektives $a_o$, $b_o$, $a_m$, $b_m$, $\Theta_0$ und $\Phi_0$ recht einfach zu bestimmen: $a_m$, $b_m$, $\Theta_o$ und $\Phi_o$ direkt über das Auslesen von an den Standarten angebrachten Winkelaufnehmern, $a_o$ und $b_o$ über die Messung von Auszugsdifferenzen beim Fokussieren der Bildpunkte $B_i$. Die Messung des weiteren Parameters $d_o$ der Ausgangs-Bildebene jedoch wirft insofern nicht unerhebliche technische Probleme auf, als daß der absolute Wert des Auszugs für jeden der Punkte $B_i$ sehr exakt (auf ca. 50...100µm genau) bestimmt werden muß. Da die Auszugslänge Werte bis zu einem Meter und mehr erreichen kann, bedeutet dies, daß der Abstand des Bildpunktes $B_i$ vom Objektiv mit einem Fehler von maximal 0,1 Promille direkt gemessen werden muß. Dies ist zwar möglich, technisch jedoch aufwendig, weshalb wir ein indirektes Verfahren zur Bestimmung der Auszugslänge entwickelt haben. Deshalb wird erfindungsgemäß eine indirekte Bestimmung dieses Parameters vorgenommen.

Es wird die Tatsache ausgenutzt, daß sich die Bildweite $b$ eines vom Objektiv abgebildeten Objektpunktes $S$ ändert, wenn das Objektiv geschwenkt wird. Das Ausmaß dieser Bildweitenänderung $\Delta b$ hängt in eindeutiger Weise von der Gegenstandsweite $s$ des Punktes $S$ ab, so daß der Wert von $x$ aus $\Delta b$ und dem verwendeten Verstellwinkel $\Theta$ bestimmt werden kann. Ist $s$ bekannt, kann über die Abbildungsgleichung direkt der Absolutwert von $b$ ermittelt werden. Der absolute Fehler des Wertes für $b$ liegt dabei in der Größenordnung des Meßfehlers der Auszugsdifferenz $\Delta b$, die sehr exakt bestimmbar ist (besser als auf ca. 50µm, so daß der relative Fehler den zulässigen Wert nicht überschreitet.

Besonders einfach wird diese Methode, wenn man das Objektiv nur um die Y-Achse um den Winkel $\Theta$ verschwenkt (d.h. $\Phi = 0$) und einen Objektpunkt $S$ heranzieht, der in der XY-Ebene liegt. Dann ist der Abstand dieses Punktes von der Objektivebene allein durch seine Bildweite $s$ und den Verstellwinkel $\Theta$ gegeben gemäß $\gamma = \frac{a\cos\theta}{f}$.

Für die Bildweite $b$ des Bildpunktes von $S$ gilt dann:

$$b(s,\theta) = \frac{s}{1-\gamma} = \frac{fs}{f - s\cos\theta}. \tag{5}$$

Die Auszugsdifferenz $\Delta b$ ($s$, $\Theta$) wird entsprechend definiert als

$$\Delta b(s,\theta) = b(s,0) - b(s,\theta) = \frac{fs}{f - s} - \frac{fs}{f - s\cos\theta}. \tag{6}$$

Daraus ergibt sich direkt der folgende Ausdruck für die Gegenstandsweite $s$:

$$s = \frac{\Delta bf(1 + \cos\theta)\ddagger\sqrt{(\Delta bf(1 + \cos\theta))^2 - 4\Delta bf^2(\Delta b \cos\theta - f(1 - \cos\theta))}}{2(\Delta b\cos\theta - f(1 - \cos\theta))} \tag{7}$$

Physikalisch relevant ist hierbei nur die Lösung mit dem Pluszeichen vor dem Wurzelausdruck, weil nur sie einen Wert s = f liefert, der zu einer reellen Abbildung des Punktes führt. Die Bildweite des Punktes für $\Phi = 0$, relativ zu der die Auszugsdifferenz $\Delta b$ gemessen wird, kann jetzt mit Hilfe der Abbildungsgleichung gemäß

$$b(s, \theta = 0) = \frac{fs}{f - s} \tag{8}$$

bestimmt werden; es ist jetzt möglich, auch alle anderen gemessenen relativen Auszüge (d.h. die x-Koordinaten der scharf abzubildenden Bildpunkte Bi) absolut anzugeben, ohne irgendeine Bildweite direkt gemessen zu haben, da die X-Achse jetzt mit einem definierten Nullpunkt versehen ist; die y- und z-Koordinaten sind einfach aus der Position des beweglichen CCD-Chips auf der Mattscheibe, der X-Achsenlage dort und den Schwenkwinkeln $\alpha$, $\beta$ der Mattscheibe, abzuleiten. Aus dem jetzt absolut bestimmbaren Schnittpunkt der Ausgangsbildebene mit der X-Achse, $x_o$, läßt sich ihr z-Achsenabschnitt $d_o$ gemäß

$$d_0 = -a_0 x_0 \tag{9}$$

berechnen und in die Beziehungen (1), (2) und (3) einsetzen.

Die Genauigkeit des Verfahrens läßt sich noch steigern, indem man nicht nur eine, sondern mehrere Auszugsdifferenzen bei unterschiedlichen Verstellwinkeln $\Theta$ mißt und die aus ihnen erhaltenen Werte für s mittelt. Wenn beim Verschwenken des Objektives der CCD-Chip durch geeignete motorische Steuerung stets auf der Verbindungslinie Objektivmittelpunkt-Anfangsposition ($\Theta = 0$) gehalten wird, kann eine große Anzahl von $\Delta b$-Werten für viele verschiedene Werte von $\Theta$ während des Objektiv-Verschwenkvorgangs bestimmt werden, wodurch die Genauigkeit des erhaltenen Wertes für die Gegenstandsweite sehr groß wird.

Sollte einmal kein geeigneter Objektpunkt zur Verfügung stehen, der in der XY-Ebene liegt, kann natürlich auch jeder beliebige andere Objektpunkt verwendet werden; die Rechnung wird dabei allerdings ein wenig komplizierter, da der Abstand des Punktes von der Objektivebene auch von seiner z-Koordinate $z_s$ abhängt. Es gilt:

$$\gamma = \frac{1}{f}(s \cos\theta - z_S \sin\theta) \tag{10}$$

und damit

$$\Delta b(s, z_S, \theta) = fs\left(\frac{1}{f - s} - \frac{1}{f - s\cos\theta - z_S\sin\theta}\right). \tag{11}$$

Es müssen jetzt mindestens zwei Werte für Ab bei unterschiedlichen Verstellwinkeln $\Theta$ gemessen werden; an den so erhaltenen Verlauf von $\Delta b$ ($\Theta$) kann dann die Beziehung (11) durch Variation der freien Parameter s und zs angefittet werden. Der Parameter $z_s$ wird nicht weiter benötigt, aus s kann gemäß (8) die Bildweite b($\Theta = 0$) bestimmt werden. Die Genauigkeit der gefitteten Parameter steigt natürlich mit der Anzahl der gemessenen Werte; auch hier ist es möglich, die Messungen durch automatisches Nachführen des CCD-Chips sehr schnell für sehr viele Werte von $\Theta$ durchzuführen.

Von der Tatsache, daß während der Bestimmung der Auszugsdifferenzen der Meß-CCD immer auf die gleiche Stelle im Bild ausgerichtet sein muß, läßt sich profitieren, indem man die vollständige Information nutzt, die das Fokussierverfahren liefert. Das Verfahren basiert darauf, daß für die betrachtete Bildregion eine Schärfemeßzahl ermittelt wird, die vom Abstand des Meß-CCDs (in x-Richtung) vom Fokus abhängt und im Fokus maximal wird. Außerhalb des Fokus ist ihr Wert ein Maß für den Abstand des CCDs vom Schärfepunkt. Nutzt man dies aus, braucht nur einmal zu Anfang die Umgebung des Fokus durchfahren zu werden, um für die betrachtete Bildregion den Verlauf der Schärfemeßzahl in Abhängigkeit vom relativen Ort auf der X-Achse zu ermitteln; aus der Verringerung der Schärfemeßzahl beim Verschwenken des Objektivs kann dann gleich auf die Fokus- und damit direkt auf die Auszugsdifferenz geschlossen werden, ohne jeweils neu zu fokussieren. Diese Vorgehensweise ermöglicht eine schnellere Messung der Auszugsdifferenz von $\Delta b$ in Abhängigkeit vom Objektiv-Verschwenkwinkel $\Theta$.

Mit den hier dargestellten Verfahren ist es möglich, allein aus der Bildinformation alle notwendigen Verstellparameter zu ermitteln; zusätzlich wird umgangen, die Bildweiten der scharf wiederzugebenden Bildpunkte durch direkte Längenmessung zu ermitteln, was mit der erforderlichen Genauigkeit technisch sehr aufwendig und daher mit hohen Kosten verbunden wäre. Statt dessen wird die Gegenstandsweite eines prinzipiell beliebigen Objektpunktes durch Messung der Bildweite seines Bildpunktes bei verschiedenen Objektivstellungen berechnet und daraus der Absolutwert der Bildweite bei nicht verschwenktem Objektiv ermittelt. Die X-Achse des "bankfesten" Kamera-Koordinatensystems wird also mit einem Nullpunkt versehen, dessen Abstand vom Objektiv sehr exakt bekannt ist und relativ zu dem alle weiteren Auszugsdifferenzen mit hoher Genauigkeit gemessen werden können; die hierzu verwendeten Längenmeßstrecken des Wegaufnehmers müssen nur einige cm lang sein.

Zusätzlich werden alle Probleme vermieden, die sich bei einer direkten Abstandsbestimmung aus der thermischen Ausdehnung der optischen Bank oder aus dem nicht ganz exakten Zusammensetzen einer geteilten optischen Bank aus mehreren Teilstücken ergeben könnten. Es ist nicht einmal wichtig, ob die Objektiv- und die Bildstandarte überhaupt miteinander verbunden sind. Die Abstände, die in der Mattscheibenebene noch direkt absolut bestimmt werden müssen (alle Längen in y*- und z*-Richtung), liegen im cm-Bereich und sind daher ebenfalls über preiswerte Wegaufnehmer leicht mit der erforderlichen Genauigkeit zu ermitteln.

Es ist bekannt, daß das sogenannte Auswandern der Bildpunkte, das zu einer unerwünschten Perspektivveränderung führt, beim Scharfstellen mit doppeltem Schärfeausgleich dann zu vermeiden ist, wenn eine dünne Linse um solche Schwenkachsen verschwenkt wird, die sich in der optischen Achse schneiden. Deshalb werden bei den gewöhnlichvorhandenen zur optischen Achse versetzten mechanischen Schwenkachsen virtuelle Schwenkungen um die sich schneidenden virtuellen Achsen ausgeführt, wozu komplizierte Ausgleichsverschwenkungen und -verschiebungen erforderlich sind. Hierbei treten oft auch unerwünschte Auswanderungen der Objektivstandarte auf, die zum Erreichen von Grenzpositionen führt. Weiterhin tritt häufig ein unerwünscht starkes Auswandern des gesamten scharfzustellenden Bildes in dem Bildfeld der Mattscheibe auf.

Das Auswandern tritt in noch größerem Maße für in der Praxis eingesetzte Objektive auf, deren Abbildungsverhalten in guter Näherung mittels zweier Hauptebenen zu beschreiben ist. Hierbei zeigen umfangreiche Berechnungen, daß ein Auswandern vermieden werden kann, wenn sich die Schwenkachsen in dem Bereich mittig zwischen den Hauptebenen und der Hauptebene H' mit der optischen Achse schneiden. Die günstigste Lage des Schnittpunktes der Achsen ist fortschreitend von der Mitte zwischen den Hauptebenen in der Folge:
Makroobjektiv, Normalobjektiv II, Normalobjektiv I und Weitwinkelobjektiv, zur Hauptebene H' gegeben.

Diese Erkenntnis wird zu einer vorteilhaften Vereinfachung der Objektiveinstellung genutzt, indem jedes Objektiv entsprechend seiner optimalen, das Auswandern vermeidenden, Schwenkachsenlage mittels eines Einsatzes in die Objektivstandarte eingesetzt wird, der die Objektivaufnahmeebene zur Standartenaufnahmeebene passend axialversetzt hält. Dadurch wird mit der Verschwenkung der Standarte jedes jeweils eingesetzte Objektiv ohne weitere Ausgleichseinstellungen jeweils um die optimale Schwenkachse bewegt, so daß ein Auswandern weitgehend vermieden wird. Die Verwendung dieser einfachen Adaptereinsätze vereinfacht nicht nur die Einstellung des Objektivs, sondern sie vereinfacht auch jeweils die Scharfstellung eines Bildpunktes, wenn eine Objektivverschwenkung vorgenommen wird, und die gemessenen und zur Abbildungsberechnung genutzten differentiellen Auszugswerte sind gut zu den zugehörigen Verschwenkwinkeln korreliert, was entsprechend genaue Berechnungsergebnisse erbringt.

Die Verwendung der Objektivadaptereinsätze ist unabhängig von der Verwendung in dem automatischen Einstellsystem vorteilhaft und erfinderisch, da auch bei einer Handeinstellung oder bei semiautomatischer Einstellung des Objektivs das bisher als unvermeidlich geltende Auswandern des Bildes dadurch vermieden wird.

Vorteilhafte Ausgestaltungen sind in den Fig. 1 bis 7 dargestellt.

Fig. 1    zeigt die Kamera in vereinfachter Darstellung und ohne Balgen mit schematisierter Steuervorrichtung,

Fig. 2    zeigt die funktionale Abhängigkeit der Bildweite von der Auszugsdifferenz bei verschiedenen Objektiv-Verschwenkwinkeln jeweils brennweitennormiert,

Fig. 3    zeigt absolute Fehler der Bildweite bei gegebenen Meßfehlern für ein 65 mm Objektiv bei verschiedenen Schwenkwinkeln,

Fig. 4    zeigt Bildweitenfehler für ein 1800 mm Objektiv,

Fig. 5 bis 7    zeigen einen Objektivstandartenrahmen mit verschiedenen Adaptereinsätzen.

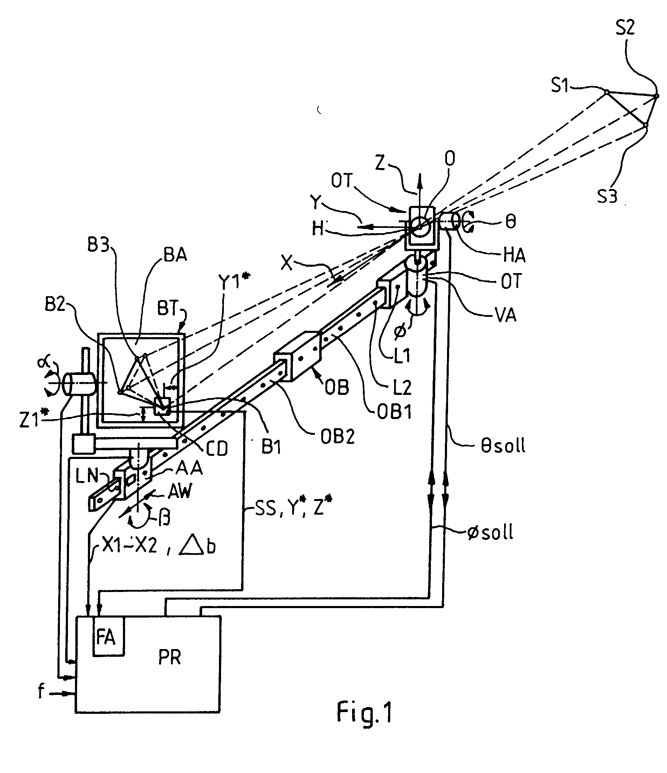

Fig. 1 zeigt eine Kamera mit einer optischen Bank (OB), die auch aus mehreren Abschnitten zusammengesetzt sein kann. Auf ihr ist ein Objektivträger (OT) montiert, der ein Objektiv (O) trägt, das um zwei Achsen (Y, Z) verschwenkbar gehalten ist. Die Schwenkwinkel ($\Theta$, $\Phi$) werden über Winkelgeber an den Prozessor (PR) signalisiert. Ggf. sind elektrisch gesteuerte Objektiwerschwenkantriebe (HA, VA) vorgesehen, die von dem Prozessor (PR) angesteuert werden.

Weiterhin ist auf der Bank (OB) ein Bildträger (BT) angeordnet, der ebenfalls um zwei Achsen verschwenkbar eine Bildaufnehmerebene (BA), die während der Einstellung im allgemeinen mit einer Mattscheibe bestückt ist, trägt. Auch deren Verschwenkwinkel ($\alpha$, $\beta$) werden über Winkelgeber dem Prozessor (PR) gemeldet. Auch diese Verschwenkungen sind ggf. durch elektrisch gesteuerte Antriebe vom Prozessor (PR) steuerbar.

In der Bildaufnehmerebene ist ein CCD-Sensor (CD) positionierbar, wobei jeweils zwei relative Lagekoordinaten (Y1*, Z1*) desselben auf der Mattscheibe an den Prozessor (PR) gegeben werden. Diese Lagekoordinaten können von einer Positioniervorrichtung der Meßsonde (CD) abgenommen werden. Außerdem gibt die CCD-Meßsonde (CD) schärferelevante Bildpunkthelligkeitssignale (SS) des jeweils ausgewählten Bereichs an den Prozessor (PR) zur Auswertung auf ein Schärfekriterium in bekannter Weise mittels eines Fourieranalysators (FA).

Der Bildträger (BT) ist auf der Bank (OB) mit einer Auszugsverstellvorrichtung (AA) axial verstellbar angeordnet, deren Verstellsignal dem Prozessor (PR) als die Auszugsweite (AW) zugeleitet ist. Die Auszugsverstellvorrichtung (AA) hat ggf. einen elektrisch gesteuerten Antrieb, der vom Prozessor (PR) gesteuert wird.

Zur Veranschaulichung der Arbeitsweise der Kamerascharfeinstellung ist ein karthesisches Koordinatensystem eingezeichnet, dessen X-Achse durch den Hauptpunkt (H) des Objektivs (O) parallel zur Bank (OB) verläuft. Falls eine verschwenkbare Bank vorgesehen ist, muß deren Verschwenkung gegen die Standarten durch eine entsprechende Koordinatentransformation berücksichtigt werden. Nach oben ist die Z-Achse und zur Seite die Y-Achse gerichtet. Im einfachsten Fall sollen drei Szenenpunkte (S1 - S3) in der Bildaufnehmerebene (BA) scharf abgebildet werden und in einer bestimmten Perspektive zueinander angeordnet sein. Bei der Voreinstellung von Hand liegen die drei den Szenenpunkten (S1 - S3) zugehörigen Bildpunkte (B1 - B3) im allgemeinen in einer von der Mattscheibe abweichenden Anfangs-Bildebene, die somit durch die drei Bildpunkte (B1 - B3) bestimmt ist. Im Beispiel ist der erste Bildpunkt (B1) mit den Lagekoordinaten (Y1*, Z1*) mittels des Sensors (CD) auf der Mattscheibe scharf eingestellt. Der zweite und dritte Bildpunkt (B2, B3) liegen außerhalb der Mattscheibe.

Aus dieser Grundeinstellung wird dann im Laufe des Verfahrens die Scharfeinstellung vorgenommen. Dazu werden jeweils nach der Positionierung des CCD-Sensors (CD) auf den zweiten bzw. dritten Bildpunkt, der anfangs auf der Mattscheibe noch unscharf zu sehen ist, Auszugsveränderungen bis zur Scharfstellung vorgenommen. Dadurch ergeben sich am Auszug Differenzangaben (x1 - x2, x2 - x3) der Lage der Punkte in der X-Richtung und deren Y*- und Z*-Lagekoordinaten auf der Mattscheibe, die anhand der Bildträger-Winkeleinstellungen ($\alpha$, $\beta$) in relative Raumkoordinaten, die die Neigungen der Anfangsbildebene beschreiben, umzurechnen sind.

Für die weiteren Berechnungen ist es vorgesehen, eine Bildweitenbestimmung vorzunehmen, wozu das Objektiv (O) um einen vorgegebenen Winkel ($\Theta$) verschwenkt wird und ein vorher scharf eingestellter Meßpunkt erneut scharf gestellt wird, wobei die Auszugsänderung ($\Delta b$) gemessen wird. Unter Hinzunahme der Objektivbrennweite (f), die gewöhnlich elektrisch codiert von dem Objektiv in den Prozessor zu übertragen ist, lassen sich um die Ausgangssignale ($\Theta_{soll}$, $\Phi_{soll}$, $xb_{soll}$) zur Verschwenkung der Bildpunkte in die neue Bildebene parallel zur Mattscheibe und deren entsprechende Parallelverschiebung in X-Richtung bis in diese hinein errechnen und ausgeben.

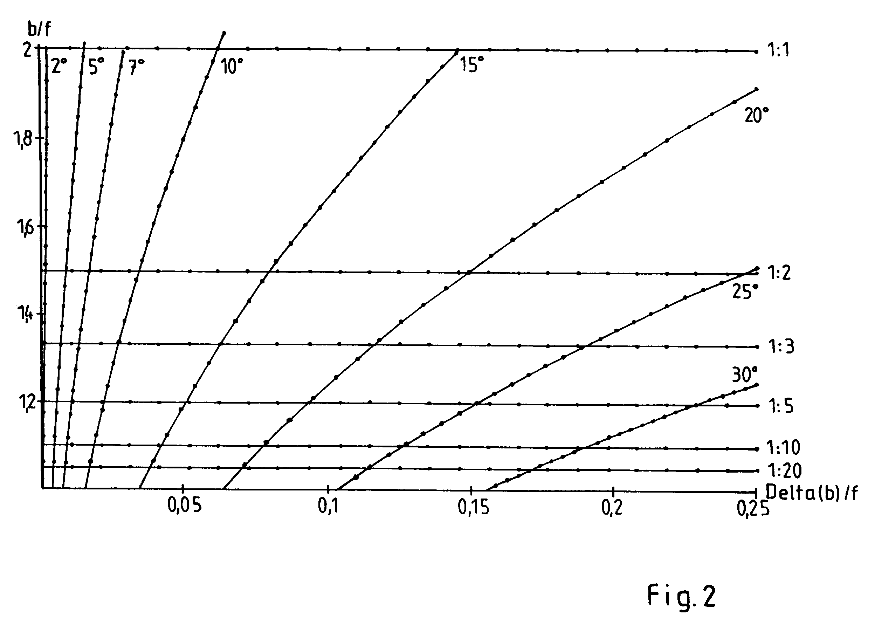

In Fig. 2 ist die Abhängigkeit der Bildweite (b) von der Auszugsdifferenz ($\Delta b$) wiedergegeben; beide Größen sind auf die Brennweite (f) normiert, wodurch der Verlauf des Graphen von (f) unabhängig wird. Die Schwenkwinkel betragen (von oben nach unten) $\Theta = 2°$, 5°, 7°, 10°, 15°, 20° 25° und 30°.

Je größer der Schwenkwinkel, um so besser läßt sich die Bildweite bestimmen, da dann eine geringe Bildweite schon eine große Auszugsdifferenz hervorruft. Ist derjenige Wert $b_f$ bekannt, für den sich $b_f$ meßtechnisch nicht mehr von 1 unterscheiden läßt, gilt für die zugehörige (sehr große) Gegenstandsweite $s_f$.

$$\frac{s_f}{f} = \frac{b_f/f}{b_f/f + 1} \qquad \text{mit } b_f < 0, \ s_f > 0. \tag{12}$$

Ab dieser Objektentfernung $s_f$ kann als Bildweite gleich ohne weitere Messung auf die Brennweite (f) eingestellt werden.

Die neuartige Vorrichtung benötigt somit keinerlei spezielle Abstandsmeßmittel zur Messung des Objektiv-Bildebenen-Abstandes, und ein solches Abstandsmaß oder ein Abbildungsmaßstab od. dgl. sind auch nicht in den Prozessor einzugeben, da sie durch die Auszugsdifferenzmessung ersetzt worden sind; die vorhandenen Meßmittel werden zusätzlich genutzt. Das neuartige Rechenverfahren erfordert nicht die Messung der absoluten Abstände der Bildpunkte zum Objektiv.

Die Einstellungen der Winkel und des Auszugs bei den Erfassungsvorgängen lassen sich sowohl von Hand vornehmen, wobei das Schärfemaß vom Prozessor zur Anzeige gebracht wird, als auch ggf. mit elektrischen Stellmitteln automatisch. Das Einstellen der Sollwinkel und des Sollauszugsmaßes kann durch Hand aufgrund von prozessorgesteuerten Einstellanweisungen oder ggf. direkt mit den elektrischen Stellmitteln durch den Prozessor erfolgen.

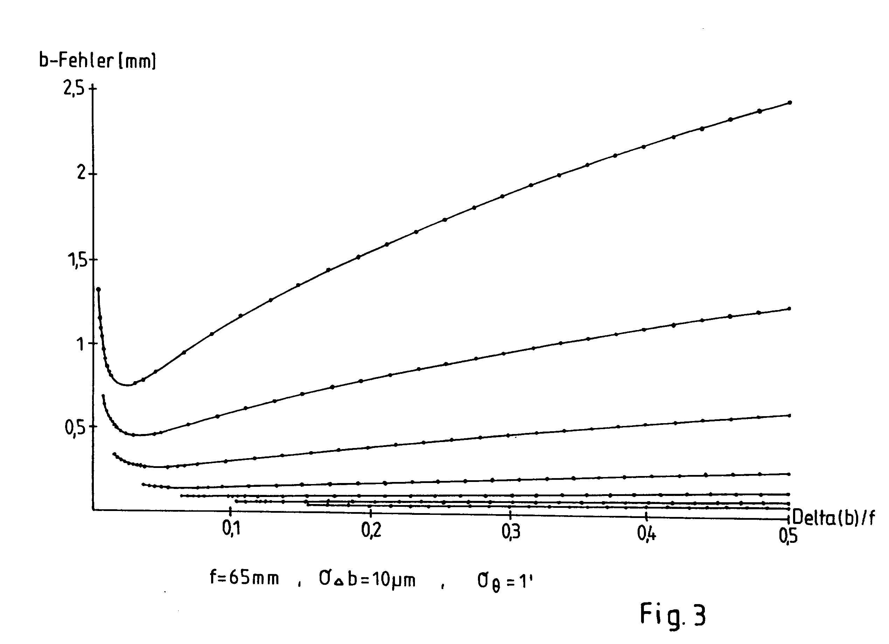

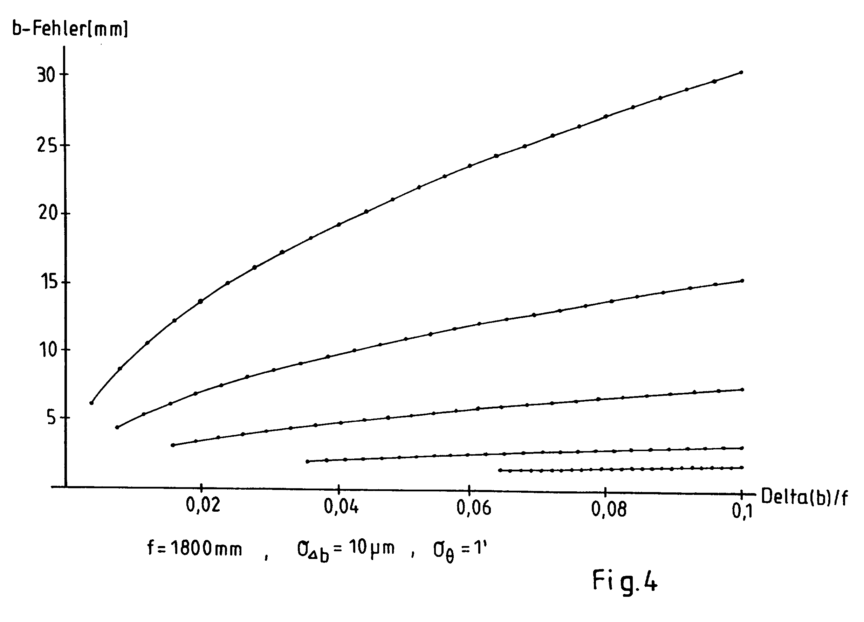

Fig. 3 und 4 zeigen Fehlergraphen für ein Objektiv mit 65 bis 1800 mm Brennweite, wobei eine Auszugsmeßgenauigkeit von 10μm und eine Winkelmeßgenauigkeit von 1' angenommen sind und Veschwenkwinkel Θ von 5°, 7°, 10°, 15°, 20° 25° und 30° als Parameter gewählt sind. Bei großen Schwenkwinkeln läßt sich der Fehler auch bei großen Brennweiten klein halten. Da jedoch relativ große Auszugslängen dabei zu messen sind, hat es sich als vorteilhaft erwiesen, wenn die x-Koordinatenbestimmung aus der Auszugsweite (AW), die meßtechnisch mit der genannten Genauigkeit erfaßt wird, und aus einem grob gerasterten, aber genauen Grundmaß kombiniert erfolgt. Dazu weist die optische Bank (OB), Fig. 1, ein mechanisches Raster, insbesondere ein Lochraster (L1 - LN) auf, das der rastergenauen Positionierung des Objektträgers (OT) und des Bildträgers (BT) auf der Bank durch eine Verstiftung dient. Auch mehrere Bankabschnitte (OB1, OB2) werden jeweils rastergenau miteinander durch eine Verstiftung in dem Lochraster verbunden. Die x-Koordinatenbestimmung erfolgt somit zuerst wie gezeigt mit einem relativ großen Fehler, wonach eine Einordnung des Maßes in den nächst benachbarten Rasterabschnitt erfolgt und auf das zugehörige Rastermaß die Restweite vom gefundenen Rasterpunkt an addiert wird, so daß der absolute Gesamtfehler nur wenig größer als der der Auszugsweite ist. Dies erlaubt auch mit kleinen Schwenkwinkeln Θ bei relativ geringen Auszugsweiten zu arbeiten, wobei trotzdem eine hohe Genauigkeit der Bildweitenbestimmung erreicht wird.

Die Rasterlänge wird zweckmäßig kleiner als die Meßstrecke der Auszugsweite gewählt und um ein mehrfaches größer als der größte absolute Fehler, der bei einem vorgegebenen Schwenkwinkel auftritt.

Durch das Lochraster ergibt sich eine weitere Alternative zur indirekten Bildweiten- oder Maßstabsbestimmung, indem der Objektivträger (OT) um mindestens eine Rasterlänge verschoben wird und vor- und nachher eine Scharfstellung eines Szenenpunktes erfolgt, wobei die Auszugslänge ermittelt wird.

Das Raster an der optischen Bank und die zugehörigen Rastvorrichtungen an den Standarten und den Bankverbindern sind vorteilhafte Ausbildungen der Kameraanordnung für die Anwendung des neuartigen Scharfstellungsverfahrens.

Wie bereits erwähnt, lassen sich die angegebenen Formeln auch auf Objektive mit mehreren Hauptebenen erweitern, und außerdem läßt sich berücksichtigen, daß die Schwenkung des Objektives häufig nicht um eine Hauptebenenachse sondern parallel versetzt dazu erfolgt. Durch den Abstand $d_h$ der Hauptebenen ergibt sich ein paralleler Versatz h der Bildebene in Richtung vom Objektiv fort aus h = $d_h$ . cosα. Daraus leitet sich der Paramter der verschobenen Bildebene dvm ab zu:

$$d_m^v = d_m - h\sqrt{a_m^2 + b_m^2 + 1} = d_m - d_h(a_m \cos\phi \cos\theta + b_m \sin\phi \cos\theta - \sin\theta) \tag{13}$$

Durch Umrechnung auf das Drehpunktkoordinatensystem, dessen Parameter mit dem Hochindex H gekennzeichnet sind, und unter Einsetzung der Soll-Objektivverstellwinkel ergibt sich die Auszugsverstellung für die doppelte Scharfeinstellung zu

$$x_b = -\frac{d_m^v}{a_m} + \frac{d_h}{a_m} (a_m \cos\phi_p \cos\theta_p + b_m \sin\phi_p \cos\theta_p - \sin\theta_p) \tag{14}$$

mit dem Z-Achsabschnitt

$$d_m^v = d_m^H + a_m A_1 \cos\phi_p \cos\theta_p + b_m A_1 \sin\phi_p \cos\theta_p - A_1 \sin\theta_p \tag{15}$$

wobei $A_1$ ein Versatzparameter ist und wobei der Index p jeweils dem Index soll in anderen Gleichungen entspricht.

Im Vorstehenden sind verschiedene Lösungswege zur Errechnung der Solleinstellwerte dargestellt. Bei der größten Vereinfachung der Formeln, die für die dünne Linse gelten, wurde der differentielle Zusammenhang der Auszugsweite zu einer Objektivschwenkwinkeländerung in die Gleichungen eingeführt und eine geschlossene Lösung für die gesuchten Solleinstellwerte angegeben.

Werden komplexere Gleichungen angewandt, die eine genauere Beschreibung des Abbildungssystems erbringen, führen zwei Betrachtungsarten zur Lösung der Gleichungen. Bei der einen Methode werden für die zugehörigen Parameterpaare des Auszugs bei den Scharfstellungen, d.h. der Anfangsauszug und der Anfangsschwenkwinkel als unbestimmte Größen in ein erstes Gleichungssystem sowie der Endauszug, der aus der unbestimmten Größe und der Auszugsänderung bestimmt ist, mit dem Endschwenkwinkel, in ein zweites Gleichungssystem eingesetzt, wodurch bei Gleichssetzung der beiden Systeme die unbestimmte Größe eliminiert werden kann und die Gleichungen wegen ihrer Komplexität nicht geschlossen aber nach bekannten Iterationsmethoden gelöst werden können. Die Gleichsetzung der beiden bildseitigen Teile der Gleichungssysteme ist möglich, weil die beiden objektseitigen Teile der Gleichungssysteme bezüglich der Einstellungsveränderung invariant sind.

Die weitere Methode geht nicht von zwei Einstellungen und den zugehörigen Gleichungssystemen aus sondern von einer gänzlich differentiellen Betrachtung des Abbildungsgleichungssystems. Die Ableitungen der Gleichungen betreffend der zu variierenden Parameter bzw. des von der variationsabhängigen Parameters ergeben mit den eingesetzten reellen Größen der gemessenen Abhängigkeiten weitere Gleichungen, die zusammen mit dem Ausgangsgleichungssystem iterativ so zu lösen sind, daß die gesuchten Solleinstellwerte gefunden werden.

Die Bestimmung der gegenseitigen Abhängigkeiten der Objektivverstellungen zu der Auszugsveränderung jeweils bei Scharfstellung ist technisch besonders einfach und weitgehend ohne Auswanderung des Bildes zu bewerkstelligen, wenn das Objektiv um eine ganz bestimmte Schwenkachse geschwenkt wird, die sich mit der optischen Achse in einem bestimmten Punkt oder engen Bereich schneidet. Dieser Bereich liegt je nach Objektivtyp mitten zwischen den Hauptebenen bis zur Hauptebene H' und ist für den üblichen Einsatz eines Objektives festlegbar. Die Verschwenkung des Objektivs kann, wenn die optimale Schwenkachslage mit der mechanischen Schwenkachse nicht übereinstimmt, durch entsprechende Ausgleichsverschiebungen virtuell um die optimale Achse erfolgen, was jedoch jeweils entsprechende Berechnungen der Ausgleichseinstellungen und entsprechende Stellmittel erfordert.

Eine besonders einfache Einstellbarkeit des Objektivs ergibt sich, wenn die optimalen Schwenkachsen mit den mechanischen Schwenkachsen zur Deckung gebracht werden. Die mechanischen Schwenkachsen müssen sich dazu mit der optischen Achse in einem Punkt treffen und das Objektiv muß so in die Objektivstandarte eingesetzt werden, daß seine optimalen Schwenkachsen sich mit den mechanischen Schwenkachsen decken.

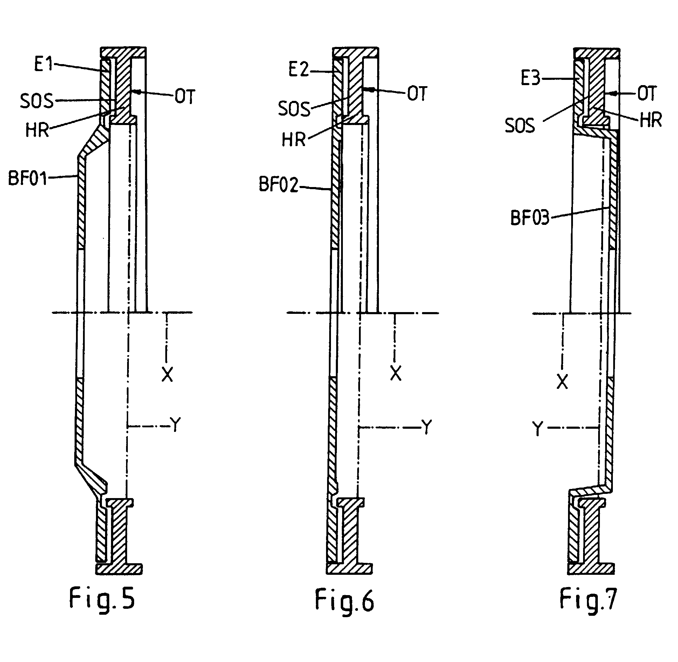

Hierzu ist es, wie Fig. 5 bis 7 zeigen, vorteilhaft vorgesehen, zwischen den Halterahmen (HR) des Objektivträgers (OT) jeweils einen Adaptereinsatz (E1 - E3) zu setzen, so daß die Rahmenbezugsfläche (SOS) jeweils einen bestimmten axialen Versatz zu der jeweiligen Objektivbezugsfläche (BF01 - BF03) aufweist und demgemäß die Schwenkachse (Y) des Objektivträgers (OT) passend im Objektiv liegt.

Bei dem ersten Einsatz (E1) in Fig. 5 ist das Objektiv zum Gegenstand hin verschoben, beim zweiten Einsatz (E2) in Fig. 6 liegt keine Achsverlagerung aus der üblichen Stellung vor und beim dritten Einsatz (E3) ist das Objektiv zur Mattscheibe hin verschoben. Die verschiedenen Adaptereinsätze (E1 - E3) sind somit plan oder erstrecken sich tubusartig einwärts oder auswärts vom Halterahmen (HR) aus.

Die Erkenntnis, daß die aufgabengemäße weitgehende Scharfstellung einer bereits voreingestellten teilweise scharfgestellten Abbildung nur eine Nachstellung der Kamera in beschränktem Rahmen erfordert, wurde erfindungsgemäß genutzt, indem nach der Bestimmung von Gradienten der Verstellparameter mit diesen Gradienten zielgerichtet die notwendige Parameternachstellung durch iterative Berechnung ermittelt wird, wobei nachweislich eine hinreichende Genauigkeit erreicht wird.

Die äußerst genaue Scharfstellung nach dem Verfahren erlaubt, wie sich gezeigt hat, jeweils die Verwendung optimaler Blendenöffnungen, die einerseits entspreched der jeweils erforderlichen Schärfentiefe bei moderatem Lichtbedarf und andererseits weitgehend Beugungsunschärfen vermeidend, gewählt wird.

**Patentansprüche**

1. Scharfstellverfahren für eine Kamera

- mit einer optischen Bank (OB),
- mit einem Prozessor (PR),
- mit einer Auszugsverstellvorrichtung (AA),
- mit einem Objektivträger (OT) und einem Bildträger (BT), die relativ zueinander in Bankrichtung (X) abstandsveränderbar gehalten sind,
- und in deren Objektivträger (OT) ein Objektiv (O) um zwei zueinander senkrechte und zur Bankrichtung (X) senkrechte Achsen, (Y, Z) verschwenkbar gehalten ist,
- und in deren Bildträger (BT)) eine Bildaufnehmerebene (BA), insbesondere eine Mattscheibe, um zwei zueinander senkrechte und zur Bankrichtung (X) senkrechte Achsen (Y, Z) verschwenkbar gehalten ist,
- und in deren Bildaufnehmerebene (BA) ein Scharfeinstellungssensor (CD), der ein Schärfemaß liefert, in zwei Bildaufnehmerkoordinaten (Y1*, Z1*) positionierbar ist,
- wobei die jeweiligen Abstandsänderungen (x1 - x2; x2 - x3, $\Delta$b) dem Prozessor (PR) zugeführt werden,
- wobei die beiden jeweiligen Objektivschwenkwinkel ($\Theta$, $\Phi$) und die Objektivbrennweite (f) dem Prozessor (PR) zugeführt werden,
- wobei die beiden jeweiligen Bildaufnehmerschwenkwinkel ($\alpha$, $\beta$) dem Prozessor (PR) zugeführt werden,

- wobei die Bildaufnehmerkoordinaten (Y1*, Z1*) jeweils dem Prozessor (PR) zusammen mit dem Schärfemaß zugeführt werden,

- wobei für die gleichzeitige Scharfeinstellung mindestens dreier ausgewählter Bildpunktbereiche (B1 - B3), die in einer Ausgangsbildebene liegen,

- diese auf der Bildaufnehmerebene (BA) mit dem Scharfeinstellungssensor (CD) durch die Änderung des Bildträgerabstandes vom Objektiv (O) nacheinander jeweils in ihrer Scharfeinstellung unter Erfassung der zugehörigen Bildaufnehmerkoordinaten (Y2*, Z2*; Y3*, Z3*) und der Bildträgerabstandsänderung (x1 - x2; x2 - x3) lagemäßig im Prozessor (PR) erfaßt werden,

- und aus den so erhaltenen Eingangsdaten vom Prozessor (PR) Lageparameter (ao, bo, am, bm, $\Theta$o, $\Phi$o) der Bildaufnehmerebene (BA) und der Ausgangsbildebene rechnerisch ermittelt werden und daraus zusammen mit einem berechnungsnotwendigen weiteren Abbildungsparameter durch Lösung von Abbildungsgleichungen solche Solleinstellwerte ($\Theta_{soll}$, $\Phi_{soll}$, $xb_{soll}$) für Verschwenkungen des Objektivträgers (OT) und einer Abstandseinstellung des Bildträgers (BT) zum Objektivträger (OT) errechnet und ausgegeben werden

- so daß die mit diesen Solleinstellwerten ($\Theta_{soll}$, $\Phi_{soll}$, $xb_{soll}$) eingestellte neue Bildebene mit der Bildaufnehmerebene (BA) möglichst weitgehend zur Deckung kommt,

dadurch gekennzeichnet, daß einer der Objektiveinstellparameter ($\Theta$, $\Phi$, Axialverschiebung) um ein vorgegebenes Maß verändert wird und dabei für einen ausgewählten Bildpunkt eine zwischen seinen beiden Scharfstellungen liegende Auszugsdifferenz ($\Delta$b) der Auszugsverstellvorrichtung (AA) in der Bankrichtung (X) gemessen wird und

- ein erster Satz der Abbildungsgleichungen unter Einsetzung der ursprünglichen Objektiveinstellparameter und einer unbestimmten Bildweite (b) sowie ein weiterer Satz der Abbildungsgleichungen unter Einsetzung der variierten Objektiveinstellparameter ($\Theta$, $\Phi$) und der unbestimmten um die Auszugsdifferenz ($\Delta$b) geänderten Bildweite (b) gleichgesetzt und nach den Solleinstellwerten ($\Theta_{soll}$, $\Phi_{soll}$, $xb_{soll}$) aufgelöst werden oder

- funktionale Ableitungen der Abbildungsgleichungen bezüglich des Objektiveinstellparameters ($\Theta$, $\Phi$, Axialverschiebung) und bezüglich der jeweiligen Scharfstellung zugehörigen Bildweite (b) gebildet werden und die vorgegebene Einstellungsänderung ($\Theta$, $\Phi$, Axialverschiebung) und die gemessene Auszugsdifferenz ($\Delta$b) in die genannten Ableitungen eingesetzt werden und diese nach den Solleinstellsignalen ($\Theta_{soll}$, $\Phi_{soll}$, $xb_{soll}$) aufgelöst werden.

2. Verfahren nach Anspruch 1, dadurch gekennzeichnet, daß der ausgewählte Bildpunkt, bezüglich dessen die Auszugsdifferenz ($\Delta$b) gemessen wird, bei nicht um die horizontale Achse (Y) verschwenktem Objektiv (O) in der horizontalen XY-Ebene liegt und die Verschwenkung des Objektivs (O) zur Auszugsdifferenzbestimmung um die horizontale Achse (Y) um einen vorgegebenen Schwenkwinkel ($\Theta$) verschwenkt wird.

3. Verfahren nach Anspruch 1, dadurch gekennzeichnet, daß der ausgewählte Bildpunkt, bezüglich dessen die Auszugsdifferenz ($\Delta$b) gemessen wird, bei mindestens zwei Objektivschwenkwinkeln ($\Theta$, $\Phi$) scharfgestellt wird und dazu die Auszugsdifferenzen ($\Delta$b) gemessen werden und aus einer Gleichung mit den jeweils eingesetzten zu den Scharfstellungen gehörenden Objektivschwenkwinkeln ($\Theta$, $\Phi$) und Auszugsdifferenzen ($\Delta$b) durch Parametervariation eine Gegenstandsweite (S) und daraus die Bildweite (b) errechnet wird, die in die Abbildungsgleichungen zu deren Lösung eingeführt wird.

4. Verfahren nach Anspruch 1, dadurch gekennzeichnet, daß der ausgewählte Bildpunkt, bezüglich dessen die Auszugsdifferenz ($\Delta$b) gemessen wird, mit dem Scharfeinstellungssensor (CD) während einer Auszugsänderung laufend beobachtet wird und mit diesem aus Bildpunktsignalen (SS) des ausgewählten Bildpunktes jeweiligen Teilauszugsänderungen zugehörige Schärfemeßzahlen ermittelt und zugehörig abgespeichert werden und nach dem Verschwenken des Objektivs um den vorgegebenen Verschwenkwinkel ($\Theta$) oder nach der Objektivverschiebung um den vorgegebenen Axialverschiebeweg aus den dann erzeugten Bildpunktsignalen (SS) die Schärfemeßzahl ermittelt wird und mit dieser aus den abgespeicherten Schärfemeßzahlen die zugehörige Auszugsänderung ($\Delta$b) herausgesucht wird, die den weiteren Berechnungen dient.

5. Verfahren nach einem der vorstehenden Ansprüche, dadurch gekennzeichnet, daß die Bildweite (b) erst nur aus der Auszugsdifferenz ($\Delta$b) angenähert ermittelt wird und ein nächster zugehöriger Rasterabstand des Bildträgers (BT) vom Objektivträger (OT) eines Bankrasters (L1 - LN), in dem die Auszugsverstellvorrichtung (AA) des Bildträgers (BT) und der Objektivträger (OT) jeweils in der Bankrichtung (X) zueinander fixiert sind, bestimmt wird und zu diesem Rasterabstand eine auf die Lage der Auszugsverstellvorrichtung (AA) im Bankraster bezogen gemessene Auszugsweite (AW) hinzugerechnet wird und dieser so errechnete Bildträger-Objektivträgerabstand als ge-

**EP 0 803 079 B1**

nauere Bildweite (b) für die weiteren Berechnungen genutzt wird.

**6.** Verfahren nach Ansprüche 5, dadurch gekennzeichnet, daß die Objektivverschiebung so erfolgt, daß deren Verschiebeweg jeweils dem Bankraster (L1 - LN) entspricht.

**7.** Verfahren nach einem der Ansprüche 1 bis 6, dadurch gekennzeichnet, daß mittels Abbildungsgleichungen die Anfangs-Bildebene (B1, B2, B3) in den Bildraum auf eine neue Bildebene, die der Bildaufnehmerebene (BA) parallel ist, zurück abgebildet wird und daraus die diesbezüglichen Objektivverstellwinkel ($\Theta_{soll}$, $\Phi_{soll}$) und anschließend der einzustellende Schnittpunkt ($xb_{soll}$) der Bildaufnehmerebene (BA) mit der X-Achse errechnet wird.

**8.** Verfahren nach einem der vorstehenden Ansprüche, dadurch gekennzeichnet, daß ein paralleler Versatz (h) der Bildebene abhängig von einem Hauptebenenabstand ($d_h$) des Objektivs (O) und ein Versatz des Objektivschwenkachsenschnittpunktes zu dessen Hauptebenen bei der Berechnung der Solleinstellwerte ($\Theta_{soll}$, $\Phi_{soll}$, $xb_{soll}$) rechnerisch berücksichtigt werden.

**9.** Kamera zur Durchführung des Scharfeinstellverfahrens nach einem der Ansprüche 1 bis 8, dadurch gekennzeichnet, daß die optische Bank (OB) der Kamera in einem Raster mit mechanischen Rasten, insbesondere Lochrasten (L1 - LN) versehen ist, und der Objektivträger (OT) und der Bildträger (BT) mit Rastvorrichtungen, insbesondere Raststiften, in den Rasten abstandsgenau zueinander gehalten sind.

**10.** Kamera nach Anspruch 9, dadurch gekennzeichnet, daß die optische Bank (OB) aus mindestens zwei Bankabschnitten (OB1, OB2) besteht, die mit einem Verbinder mittels einer Rastvorrichtung in dem gegebenen Raster rastergenau verbunden sind.

**11.** Kamera nach Anspruch 9 oder 10, dadurch gekennzeichnet, daß die Auszugsverstellvorrichtung (AA) über mehr als einem Raster des Bankrasters (L1 - LN) ausziehbar ist.

**12.** Kamera zur Verwendung nach einem Scharfeinstellverfahren nach einem der Ansprüche 1 bis 8, dadurch gekennzeichnet, daß das Objektiv (O) derart in dem Objektivträger (OT) angeordnet ist, daß dessen Schwenkachsen (Y, Z) sich mit dessen optischer Achse (X) in einem Punkt schneiden und der Schnittpunkt zwischen den beiden Hauptebenen (H, H') des Objektivs (O) liegt.

**13.** Kamera nach Anspruch 12, dadurch gekennzeichnet, daß der Schnittpunkt der Achsen (X, Y, Z) zwischen dem Mittelpunkt, der zwischen den beiden Hauptebenen (H, H') liegt, und der Hauptebene (H') liegt.

**14.** Kamera nach Anspruch 12 oder 13, dadurch gekennzeichnet, daß zwischen dem Objektivträger (OT) und dem Objektiv (O) jeweils ein hierzu passender Einsatz (E1, E2, E3) angeordnet ist, der einen solchen Axialversatz zwischen den Aufnahmeebenen (BF01- BF03; SOS) des Objektivs (O) und des Objektivträgers (OT) aufweist, daß der Schnittpunkt der Achsen (X, Y, Z) die für das jeweilige Objekt (O) optimale axiale Lage zwischen dessen Hauptebenen (H, H') hat.

**Claims**

**1.** A focussing process for a camera

-   with an optical bench (OB),
-   with a processor (PR),
-   with an extension adjustment apparatus (AA),

having an objective lens carrier (OT) and an image carrier (BT), which are positionally variable relative to one another in the optical bench direction (X), maintained on the optical bench at es special interval,

-   and being equipped with an objective lens carrier (OT) and an objective lens (O) secured to pivot about two axes (Y, Z), said axes being vertical to one another and to an optical bench direction (X),

-   and possessing an image carrier (BT) in which an image screen (BA), especially a frosted glass plate, is secured, which screen is moveable about two axes (Y, Z) vertically disposed to one another and to the direction of the bench (X),

- and having in the image screen (BA), a focussing adjustment sensor (CD), which signals a degree of focus, and is positionable in two image reception coordinates (Y1*, Z*),

- in which the spatial interval (x1 - x2, x2 - x3, $\Delta b$) is signaled to the processor (PR),

- wherein the two respective objective lens angles ($\theta$, $\Phi$) and the focal length (f) of said lens are input to the processor (PR),

- wherein the two respective image reception angles ($\alpha$, $\beta$) thereof being sent to the processor (PR),

- wherein said reception coordinates (Y1*, Z1*), together with the focus value, are conducted to the processor (PR),

- further possessing at least three select image point areas (B1, B2, B3), which lie in a secondary image plane for the simultaneous adjustment of the focus,

- having these said image point areas and the focus adjustment sensor (CD) on the image screen (BA) subjected to determination of their respective image screen coordinates by means of a change in the interval between the image carrier (BT) and the objective lens (O) sequentially at the current time for each area through focus adjustment by means of the determination of the related screen coordinates (Y2*, Z2*, Y3* Z3*), and the said positional changes of the image carrier (BT), these being (x1 - x2, x2 - x3), are input to the processor (PR) in accord with position,

- obtaining, by means of the input data so collected, from the processor (PR) computer a determination of the positional parameters ($a_o$, $b_o$, $a_m$, $b_m$, $\theta_0$, $\Phi_0$) of the image screen (BA) as well as of the secondary image from which, together with a further image parameter necessary for computation, this latter originating in the solution of image equations, there will be calculated such set point adjustment values ($\Theta_{soll}$, $\Phi_{soll}$, $xb_{soll}$) suitable for the pivoting of the objective lens carrier (OT)) along with a value for the adjustment of the interval between the carrier of the image (BT) and the objective carrier (OT), and the results thereof being made available, so that the new image plane adjusted by these set-point values ($\theta_{soll}$, $\Phi_{soll}$, $xb_{soll}$) comes as close as possible to coinciding with the image screen (BA),

therein characterized, in that one of the objective lens focussing adjustment parameters ($\theta$, $\Phi$, axial displacement) is altered by a predetermined amount, thus allowing a condition wherein, for a selected image point, can be measured an extension difference ($\Delta b$), which distance is determined by the extension adjustment apparatus (AA) in the bench direction (X) and

- a first set of the image equations with the input of the original objective lens adjustment parameters and an undetermined image distance (b) as well as a further set of image equations with the input of the varied objective lens parameters ($\theta$, $\Phi$) and compensated by the image distance (b), this now changed by the extension difference ($\Delta b$) and the set point values (($\theta_{soll}$, $\Phi_{soll}$, $xb_{soll}$) can be solved or,

- functional derivations of the image equations were created in regard to the objective lens focussing parameters ($\theta$, $\Phi$, axial displacement) and in regard to the current image distance (b) in accord with the focus at the time and the thereby arrived at focus change ($\theta$, $\Phi$, axial displacement) and the measured extension difference ($\Delta b$), were input to the said derivations and these were solved for the set point signals ($\theta_{soll}$, $\Phi_{soll}$, $xb_{soll}$).

2. A process in accord with claim 1, therein characterized, in that the selected image point, on the basis of which the extension difference ($\Delta b$) is measured, where the objective lens (O) has not been pivoted about the horizontal axis (Y) and lies in the horizontal XY-plane and the pivoting of the objective lens (O) takes place about the said horizontal axis (Y) by a predetermined pivoting angle ($\theta$), for the determination of the extension difference.

3. A process in accord with claim 1, therein characterized, in that the selected image point, on the basis of which the extension difference ($\Delta b$) is measured is focussed by at least two pivoting angels ($\theta$, $\Phi$) of the objective lens and thereby the extension differences ($\Delta b$) are measured and from an equation with the current input of the objective lens angles ($\theta$, $\Phi$), related to the focussing, and extension differences ($\Delta b$), by means of parameter variation, a subject distance (S) is arrived at and therefrom the image distance (b) is available by computation and said image distance is input into image equations for their solution.

4. A process in accord with claim 1, therein characterized, in that the selected image point, on the basis of which the extension differences ($\Delta b$) are measured, is continually monitored by the focussing degree sensor (CD) during an extension change and the image point location signals (SS), along with the related focus values of the current incremental extension change, are accordingly stored in the processor (PR) memory; subsequent to the pivoting of the objective lens about the predetermined pivoting angels ($\theta$), or after an objective lens displacement along the axial movement path in accord with the then produced image point signals (SS), the focussing value is determined and, now having this value, from the stored date, the corresponding extension change ($\Delta b$) is sought out, which serves for further computations.

5. A process in accord with the foregoing claims, therein characterized, in that the image distance (b) is first approximated from the extension difference ($\Delta b$) and the closest related incremental movement of the image carrier (BT) from the objective lens carrier (OT) of a linear bench raster (L1 - LN) is determined; in this situation, the said image carrier's extension adjustment apparatus (AA) of the image carrier (BT) and the objective lens carriers (OT) are at the time fixed in distance to one another in the bench direction (X); to this raster interval is added a measured extension distance (AW) derived from the position of the extension adjustment apparatus (AA) on the bench raster and this, so computed image carrier interval will be used as a more exact value for the image distance (b) for further computations.

6. A process in accord with claim 5, therein characterized, in that the objective lens displacement is so carried out that the displacement path always corresponds to the bench raster (L1 - LN).

7. A process in accord with claims 1 to 6, therein characterized, in that by means of image equations, the start image plane (B1, B2, B3) in the image space is on a new image plane, which is parallel to the image acceptance plane (BA), and will be brought back and the objective lens angles ($\theta_{soll}$, $\Phi_{soll}$) and subsequently the inserted intersection point ($xb_{soll}$) of the image reception plane (BA) is calculated with the X-axis.

8. A process in accord with the foregoing claims, therein characterized, in that a parallel insert (h) of the image plane, dependent on a main lens plane interval ($d_h$) of the ovjective lens (O) and an insert of the objective lens pivoting axis intersection point for the principal thereof, is taken into consideration in the computation for the set-point values ($\theta_{soll}$, $\Phi_{soll}$, $xb_{soll}$).

9. A camera for application with a focussing process in accord with one of the claims 1 to 8, therein characterized, in that the optical bench (OB) of the camera is provided with a raster with mechanical increments, in particular by hole and space increments (L1 - LN) and the objective lens carrier (OT) and the image carrier (BT) with raster apparatus are secured incrementally exact to one another in the said raster with appropriate means, namely raster pins.

10. A camera in accord with claim 9, therein characterized, in that the optical bench (OB) is comprised of at least two bench sections (OB1, OB2), which are joined in exact incremental exactness by a connection piece possessing a raster apparatus for the given raster.

11. A camera in accord with claim 9 or 10, therein characterized in that the extension adjustment apparatus (AA) is extendable over a length greater than one raster increment of the bench raster (L1 - LN).

12. A camera for application with a focussing process in accord with one of the claims 1 to 8, therein characterized, in that the objective lens (O) is so placed in the objective lens carrier (OT), that the pivoting axes (Y, Z) of said lens intersect at a point and the point of intersection lies between the two principle planes (H, H') of the objective lens (O).

13. A camera, in accord with claim 12, therein characterized in that the intersection point for the axes (X, Y, Z) lies between the midpoint and the pricipal plane (H'), which said midpoint lies between the two principal planes (H, H').

14. A camera in accord with claim 12 or 13, therein characterized in that between the objective lens carrier (OT) and the objective lens (O), a corresponding and suitable insert (E1, E2, E3), which possesses an axial partition between the image reception surfaces (BFO1, BFO2, BF03; SOS) of the objective lens (O) and the objective carrier (OT), is placed in such a manner that the intersection point of the axes (X, Y, Z) is found in the optimal axial position for the objective lens (O) being used at that time and said point is between the principal planes (H, H').

**Revendications**

1.  Procédé de mise au point pour un appareil photographique
    avec

    -   un banc optique (OB),
    -   un processeur (PR),
    -   un dispositif de réglage du tiroir (AA),
    -   un porte-objectif (OT) et un porteur d'image (BT),

    qui sont maintenus à distance modifiable par rapport les uns aux autres, dans le sens (X) du banc,

    -   et un objectif (O) qui est maintenu dans le porte-objectif (OT) et peut être orienté sur deux axes (Y, Z) perpendiculaires l'un à l'autre et perpendiculaires au sens (X) du banc,
    -   et un plan de prise de vue (BA), notamment un écran dépoli, qui est maintenu dans le porteur d'image (BT) et peut être orienté sur deux axes (Y, Z) perpendiculaires l'un à l'autre et perpendiculaires au sens (X) du banc,
    -   et un senseur de mise au point (CD), qui fournit une valeur de netteté et peut être positionné, dans le plan de prise de vue (BA), selon deux coordonnées de prise de vue (Y1*, Z1*)
    -   les modifications de distance respectives (x1 - x2; x2 - x3 $\Delta$b),
    -   les deux angles de pivotement de l'objectif ($\Theta$ $\Phi$) et la distance focale (f) de l'objectif,
    -   ainsi que les deux angles de pivotement de prise de vue ($\alpha$, $\beta$)
    -   et les coordonnées de prise de vue (Y1*, Z1*) avec la valeur de netteté étant respectivement conduits au processeur (PR),
    -   et, pour la mise au point simultanée d'au moins trois domaines de point d'image sélectionnés (B1 à B3), situés sur un plan focal de départ,
        ceux-ci, captés successivement en ce qui concerne leur mise au point respective, sur le plan de prise de vue (BA), par le senseur de mise au point (CD), en fonction de la modification de la distance du porteur d'image de l'objectif (0), étant saisis par le processeur (PR) avec les coordonnées de prise de vue afférentes (Y2*, Z2*; Y3*, Z3*) et la modification de la distance du porteur d'image correspondante (x1 - x2; x2 - x3),
    -   et les paramètres d'orientation (ao, bo, am, bm, $\Theta$o, $\Phi$o) du plan de prise de vue (BA) et du plan focal de départ étant calculés sur la base des données de départ du processeur (PR) ainsi obtenues, et des valeurs de consigne de mise au point ($\Theta_{soll}$, $\Phi_{soll}$, xb$_{soll}$) étant calculées à partir de ces paramètres et d'un autre paramètre d'équations d'image indispensable au calcul, par solution d'équations d'image, et émises aux fins d'orientation du porte-objectif (OT)
    -   de sorte que le nouveau plan focal réglé à l'aide de ces valeurs de consigne ($\Theta_{soll}$, $\Phi_{soll}$, xb$_{soll}$) coïncide le plus possible avec le plan de prise de vue (BA),

    caractérisé en ce que
    l'un des paramètres de réglage de l'objectif ($\Theta$, $\Phi$, déplacement axial) est modifié d'une valeur prédéfinie et que, ce faisant, une différence de tirage ($\Delta$b), située entre les deux positions de mise au point du dispositif de réglage du tiroir (AA), est mesurée dans le sens (X) du banc pour un point d'image sélectionné et

    -   qu'un premier jeu d'équations d'image, utilisant les paramètres initiaux de réglage de l'objectif et une distance indéfinie de l'image (b), et un autre jeu d'équations d'image, utilisant les paramètres variés de réglage de l'objectif ($\Theta$,$\Phi$) et la distance d'image indéfinie (b) modifiée de la différence de tirage ($\Delta$b), sont mises à égalité et résolues d'après les valeurs de consigne de mise au point ($\Theta_{soll}$, $\Phi_{soll}$, xb$_{soll}$) ou
    -   que des dérivations fonctionelles des équations d'image sont formées en ce qui concerne les paramètres de réglage de l'objectif ($\Theta$,$\Phi$, déplacement axial) et en ce qui concerne la distance d'image (b) correspondant à la mise au point respective, et la modification de mise au point prédéfinie ($\Theta$,$\Phi$, déplacement axial) et la différence de tirage ($\Delta$b) mesurée étant prises en compte dans les dites dérivations et celles-ci résolues conformément aux signaux de réglage de consigne ($\Theta_{soll}$, $\Phi_{soll}$, xb$_{soll}$).

2.  Procédé selon la revendication 1,
    caractérisé en ce que

le point d'image sélectionné, quant auquel la différence de tirage ($\Delta$b) doit être mesurée, se trouve sur le plan horizontal XY quand l'objectif (O) n'est pas pivoté sur l'axe horizontal (Y)

et que l'objectif (O) est pivoté d'un angle prédéfini ($\Theta$) sur l'axe horizontal (Y) aux fins de définition de la différence de tirage.

3.   Procédé selon la revendication 1,
     caractérisé en ce que

le point d'image sélectionné, quant auquel la différence de tirage ($\Delta$b) doit être mesurée, est mis au point, en cas d'au moins deux angles d'orientation ($\Theta$,$\Phi$), et les différence de tirages ($\Delta$b) mesurées

et que, sur la base d'une équation, avec les angles de pivotement (($\Theta$,$\Phi$) de l'objectif et les différence de tirages ($\Delta$b) respectivement utilisées et se rapportant aux positions de mise au point, une distance d'objet (S) est calculée, par variation de paramètres, et qu'une distance d'image (b), calculée à partir de cette distance d'objet, est prise en compte dans les équations d'image en vue de les résoudre.

4.   Procédé selon la revendication 1,
     caractérisé en ce que

le point d'image sélectionné, quant auquel la différence de tirage ($\Delta$b) doit être mesurée, est continuellement observé par le senseur de mise au point (CD) pendant une modification du positionnement du tiroir et des valeurs mesurées de netteté afférentes aux modifications de tirage partielles, respectives sont détectées sur la base de signaux de point d'image (SS) et mémorisées adéquatement

-    et qu'après que l'objectif (O) ait été pivoté sur l'angle prédéfini ($\Theta$) ou déplacé sur le parcours axial prédéfini, la valeur mesurée de netteté est déterminé à partir des signaux de point d'image ainsi obtenus, et la différence de tirage ($\Delta$b) adéquate, servant aux calculs suivants, est recherchée à l'aide de cette valeur mesurée et des valeurs mesurées mémorisées.

5.   Procédé selon l'une des revendications précédentes,
     caractérisé en ce que la distance de l'image (b) n'est d'abord définie qu'approximativement sur la base de la différence de tirage ($\Delta$b) et qu'une distance voisine entre le porteur d'image (BT) et le porte-objectif (OT) dans la trame du banc (L1 - LN), dans laquelle le dispositif de réglage de tirage (AA) du porteur d'image (BT) et le porte-objectif (OT) sont respectivement fixés par rapport l'un à l'autre, dans le sens (X) du banc, est déterminée et une distance de tirage mesurée y est ajoutée, la distance entre porteur d'image et porte-objectif ainsi calculée étant utilisée comme distance de l'image (b) pour les calculs suivants.

6.   Procédé selon la revendication 5,
     caractérisé en ce que

le décalage de l'objectif s'effectue de sorte que le parcours de déplacement corresponde respectivement à la trame du banc (L1 - LN).

7.   Procédé selon l'une des revendications 1 à 6,
     caractérisé en ce que

le plan focal de départ (B1, B2, B3) est de nouveau représenté l'espace-image, sur un nouveau plan focal parallèle au plan de prise de vue (BA), à l'aide d'équations d'image et que l'angle de réglage de l'objectif (($\Theta_{consigne}$, $\Phi_{consigne}$), puis le point d'intersection à régler (xb $_{consigne}$) du plan de prise de vue (BA) sont ainsi calculés, avec l'axe X.

8.   Procédé selon l'une des revendications précédentes,
     caractérisé en ce que

un décalage parallèle (h) du plan focal dépendant d'une distance des plans principaux ($d_h$) de l'objectif (O) et un décalage du point d'intersection des axes de pivotement de l'objectif par rapport à ses plans principaux sont pris en considération lors du calcul des valeurs de consigne de réglage ($\Theta_{consigne}$, $\Phi_{consigne}$, xb $_{consigne}$).

9.   Appareil photographique pour la réalisation du procédé de mise au point selon l'une des revendications 1 à 8,

caractérisé en ce que

le banc optique (OB) de l'appareil est pourvu de plusieurs dispositifs d'arrêt mécaniques dans une trame et que le porte-objectif (OT) et le porteur d'image (BT) sont maintenus à distance exacte l'un de l'autre à l'aide de dispositifs d'arrêt, notamment de broches d'arrêt.

10. Appareil photographique selon la revendication 9,
caractérisé en ce que

le banc optique (OB) comprend au moins deux sections (OB1, OB2) qui sont reliées avec précisiopar un dispositif d'arrêt, conformément à la trame.

11. Appareil photographique selon la revendication 9 ou 10,
caractérisé en ce que

le dispositif de réglage du tiroir (AA) peut être déployé sur plus d'une division de la trame (L1 - LN) du banc.

12. Appareil photographique pour l'utilisation d'un procédé de mise au point selon l'une des revendications 1 à 8,
caractérisé en ce que

l'objectif (0) est disposé dans le porte-objectif (OT) de sorte que ses axes de pivotement (Y, Z) se croisent avec son axe optique (X) et que le point d'intersection se trouve entre les deux plans principaux (H, H') de l'objectif (O).

13. Appareil photographique selon la revendication 12,
caractérisé en ce que

le point d'intersection des axes (X, Y, Z) est situé entre le plan principal (H') et point central se trouvant entre les deux plans principaux (H, H').

14. Appareil photographique selon la revendication 12 ou 13,
caractérisé en ce que

entre le porte-objectif (OT) et l'objectif (O) un insert (E1, E2, E3) est respectivement disposé, lequel présente, entre les plans de prise de vue (BFO1 - BF03; SOS) de l'objectif (O) et du porte-objectif (OT), un décalage axial tel que le point d'intersection des axes (X, Y, Z) occupe la position axiale, optimale entre ses plans principaux (H, H').

Fig.1

Fig. 2

EP 0 803 079 B1

Fig. 3

Fig.4

Fig.5

Fig.6

Fig.7